Europäisches Patentamt

European Patent Office

Office européen des brevets

(11) Publication number: **0 460 312 A1**

# EUROPEAN PATENT APPLICATION

(21) Application number: 90306155.4

(22) Date of filing: 06.06.90

(51) Int. Cl.⁵: **B60P 1/34**

(43) Date of publication of application:
11.12.91 Bulletin 91/50

(84) Designated Contracting States:
AT BE CH DE DK ES FR GB GR IT LI LU NL SE

(71) Applicant: FRAYCO ENGINEERING LIMITED
Kirkgate, Old Deer
Peterhead, Aberdeen AB4 8LJ, Scotland(GB)

(72) Inventor: Hay, Allan
2 Knock Street, Stuartfield
Peterhead, Aberdeen, Scotland(GB)

(74) Representative: Pattullo, Norman et al
Murgitroyd and Company Mitchell House 333
Bath Street
Glasgow G2 4ER(GB)

(54) Tipping vehicle and demountable body.

(57) A trailer 1 has a chassis 10 supported on road wheels 12 and having a flat load platform 20 connected thereto by a pivot arrangement 22 at the rear of the chassis. A hydraulic ram 26 is connected between the chassis 10 and the platform 20. The pivot arrangement 22 comprises, at each side of the trailer 1, a plate 28 secured to and depending from the platform 20. A slot 30 in the plate 28 is engaged by a pin 32 projecting from the chassis 10. Initial extension of the ram causes the platform 20 to move rearwardly and upwardly in a path dictated by the pins 32 moving in the slots 30, thus raising the rear of the platform 20. Continued operation of the ram 26 then causes the platform 20 to pivot about the pins 32, thus raising the front of the platform 20.

FIG. 6

## "TIPPING VEHICLE AND DEMOUNTABLE BODY"

This invention relates to tipping vehicle adapted to carry a demountable body, and is particularly (but not exclusively) applicable to a trailer in which the demountable body can be used as a skip for building materials, refuse and the like.

Skips are normally carried by specialised vehicles which are expensive to buy or hire, and cannot be used for any other purpose.

One object of the present invention is to provide a simple and inexpensive vehicle which is capable of flexible usage.

Accordingly, the present invention provides a vehicle comprising a chassis supported by ground-engaging wheels, a substantially flat support mounted on the chassis so as to be pivotable about the rear end of the chassis, the support being connected to the chassis by a lost-motion connection which provides a limited path of motion at an angle to the vertical, and a ram connected between the chassis and the underside of the support to impart a force therebetween at an angle to the horizontal, whereby initial extension of the ram causes motion of said lost-motion connection to raise the rear of the support and, after the limit of said path of motion is complete, further extension of the ram causes pivoting movement of the support about the rear of the chassis to raise the front of the support.

Preferably, the lost-motion connection comprises, on each side of the vehicle, a pin on the chassis engaging a slot in a member secured to the support, or vice versa.

Alternatively the lost-motion connection may comprise a cam pivotally mounted on both the support and the chassis and having a wedge shaped end section such that initial extension of the cam causes the cam to pivot relative to the chassis with the wedge shaped end section engaging the chassis to raise the rear of the support.

The invention also provides the foregoing vehicle in combination with a demountable body having retractable ground-engaging legs, the support being dimensioned for insertion between the legs to engage the underside of the demountable body. The demountable body is preferably in the form of an open-topped skip.

Preferably, said support is a flat-bed load platform. The platform may conveniently be provided with means for mounting side panels and a hinged tailgate.

The vehicle is preferably a trailer.

Embodiments of the invention will now be described, by way of example only, with reference to the drawings, in which:

Fig.1 is a side view of a trailer and skip embodying the invention, in a first position with the skip demounted;

Fig. 2 is a side view showing one stage in mounting the skip on the trailer;

Fig. 3 is a side view showing a subsequent stage in mounting the skip on the trailer;

Fig. 4 shows the skip mounted on the trailer in travelling condition, and also illustrates tipping action;

Fig. 5 is a detail isometric view of one corner of the skip;

Fig. 6 illustrates one part of the trailer in greater detail; and

Fig. 7 illustrates schematically details of an alternative embodiment.

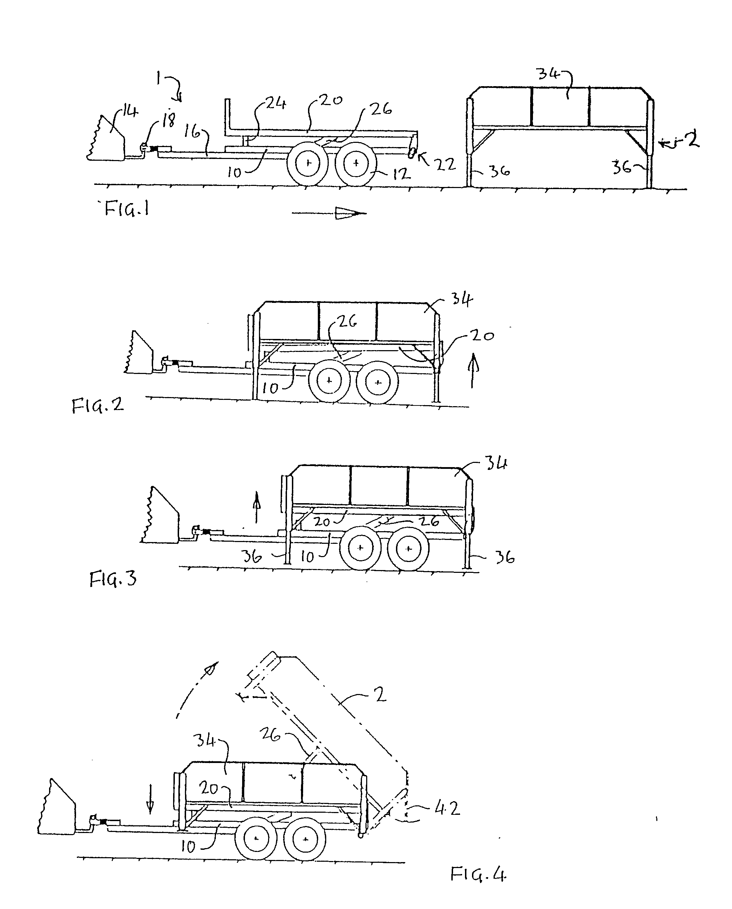

Referring to Fig. 1, the trailer 1 has a chassis 10 supported on road wheels 12 and coupled to a tow vehicle 14 via a tow bar 16 and ball hitch 18. A flat load platform 20 is supported by the chassis 10, and is connected thereto by a pivot arrangement 22 (described in more detail below) at the rear of the chassis. The front of the platform 20 simply rests on a chassis member 24. A hydraulic ram 26 is connected between the chassis 10 and the platform 20.

As seen in more detail in Fig. 6, the pivot arrangement 22 comprises, at each side of the trailer 1, a plate 28 secured to and depending from the platform 20. A slot 30 in the plate 28 is engaged by a pin 32 projecting from the chassis 10. The slot 30 is at an angle to the vertical.

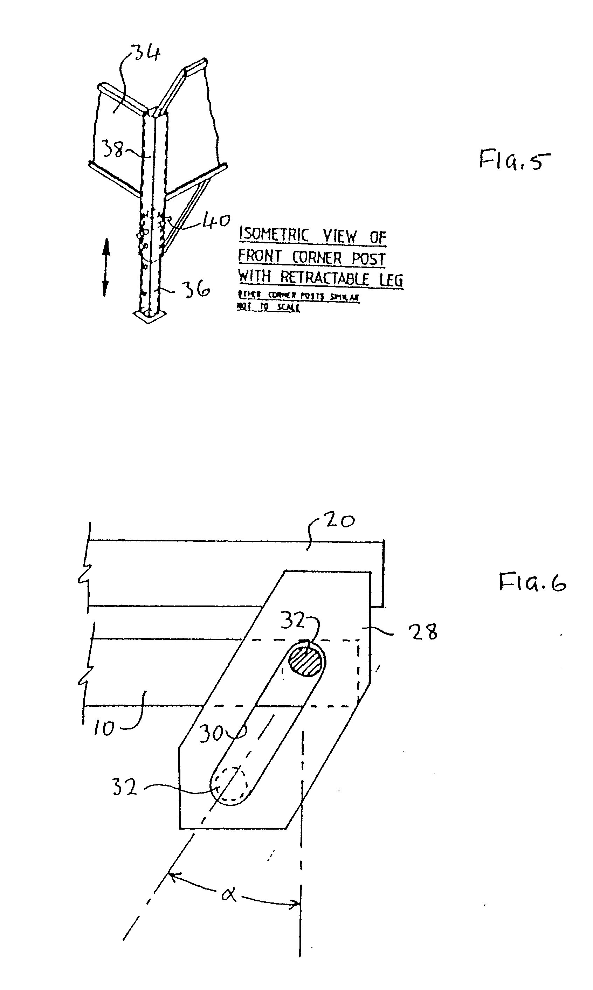

Referring again to Fig. 1 the skip 2 comprises a box-shaped body 34 provided at each corner with a retractable leg 36. Suitably, as seen in Fig. 5, each retractable leg 36 is in the form of square section tube slidable within a hollow corner post 38 of the body 34 and securable in selected positions by a peg 40 engaging through aligned holes.

In the condition shown in Fig. 1, the skip 2 is free-standing with the legs 36 extended. The procedure required to mount the skip 2 on the trailer 1 is as follows. The trailer 1 is reversed under the skip 2 (Fig. 1) until the skip 2 is positioned above the load platform 20. The ram 26 is then operated, and initial extension of the ram causes the platform 20 to move rearwardly and upwardly in a path dictated by the pins 32 moving in the slots 30, thus raising the rear of the platform 20 sufficiently to raise the rear of the skip 2 free of the ground, as shown in Fig. 2.

Continued operation of the ram 26 then causes the platform 20 to pivot about the pins 32, thus raising the front of the platform 20 to the position shown in Fig. 3 with all four legs 36 raised from the ground. Operation of the ram 26 is halted at this point, and the legs 36 are manually retracted. The ram 26 is then retracted, allowing the load platform 20, together with the skip 2 carried thereby, to rest on the load platform 20, as seen in Fig. 4, in a configuration suitable for towing.

The angle of the slots 30 must be selected, in combination with the angle and positioning of the ram 26, such that extension of the ram produces the sequence of operation described. This can be determined empirically.

As is indicated in Fig. 4 in broken outline, the ram 26 can be fully extended to raise the platform 20 and with it the skip 2 to a tipping condition. It is of course necessary to provide means (not shown) for securing the skip 2 to the platform 2 and an openable tailgate 42 on the skip.

The platform 20 may be provided with means (not shown) for mounting side panels and a pivoted tailgate directly to it, whereby the trailer 1 may be converted from a skip carrier to a tipping trailer. It is also usable, with neither the skip 1 nor the side panels mounted, as a flat-bed trailer. The ram 26 may conveniently be powered by a hydraulic pump driven by an electric motor, these being mounted on the chassis 10 and powered via a plug and socket connection from the electrical system of the towing vehicle.

The invention thus provides a versatile load carrier which can handle a variety of tasks, including loading and unloading of demountable skips or other bodies, in a simple and inexpensive manner.

Although described above in relation to a trailer, the invention can also be applied to other forms of vehicle such as an articulated semi-trailer or a rigid chassis truck.

Other modifications and improvements may be incorporated without departing from the scope of the invention.

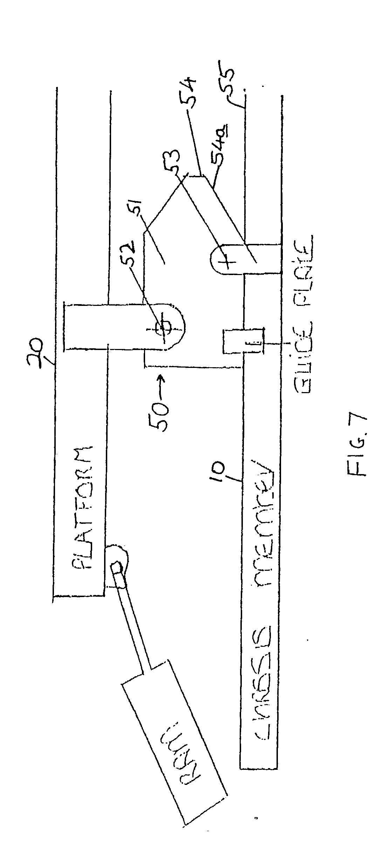

For example an alternative to the pivot arrangement 22 described above is shown schematically in Fig. 7.

In the embodiment the pivot arrangement 22 is replaced with a cam arrangement 50. A cam member 51 has a pin mounting 52 for attachment of the load platform 20 and a pin mounting 53 which attaches to the chassis 10. The cam member 51 is also provided with a wedge shaped end section 54.

In operation the effect of this arrangement is the same as that described above in relation to the first embodiment although the operating principle differs. As before when it is desired to load a skip 2 onto a trailer 1 the trailer is first reversed under the skip 2 until the skip 2 is positioned above the load platform 20. Initial extension of the ram 26 causes the platform 20 to move rearwardly so that the cam 51 pivots about the pin 53 this raising the rear of the platform 20 until face 54a of the cam 51 contacts the chassis 10 at 55.

Continued extension of the ram 26 causes the platform 20 to pivot about the pin 52 which in turn raises the front of the platform 20.

This particular arrangement is considered to be of particular application for larger sizes of trailers.

## Claims

1. A vehicle comprises a chassis (10) supported by ground-engaging wheels (12), a substantially flat support (20) mounted on the chassis (10) so as to be pivotable about the rear end of the chassis (10), the support (20) being connected to the chassis (10) by a lost-motion connection (22) which provides a limited path of motion at an angle to the vertical, and a ram (26) connected between the chassis (10) and the underside of the support (20) to impart a force therebetween at an angle to the horizontal, whereby initial extension of the ram (26) causes motion of said lost-motion connection (22) to raise the rear of the support (20) and, after the limit of said path of motion is complete, further extension of the ram (26) causes pivoting movement of the support (20) about the rear of the chassis (10) to raise the front of the support.

2. A vehicle as claimed in Claim 1, wherein the lost-motion connection (22) comprises, on each side of the vehicle, a pin (32) on the chassis (10) engaging a slot (30) in a member (28) secured to the support (20), or vice versa.

3. A vehicle as claimed in Claim 1, wherein the lost-motion connection comprises, on each side of the vehicle, a cam (51) pivotally mounted on both the support (20) and the chassis (10) and having a wedge shaped end section (54) such that initial extension of the cam (51) causes the cam (51) to pivot relative to the chassis (10) with the wedge shaped end section (54) engaging the chassis (10) to raise the rear of the support (20).

4. A vehicle as claimed in Claim 1, 2 or 3 in combination with a demountable body (34) having retractable ground-engaging legs (36), the support (20) being dimensioned for insertion between the legs (36) to engage the underside of the demountable body (34).

5. A vehicle as claimed in Claim 4, wherein said support is a flat-bed load platform, the platform being provided with means for mounting side panels and a hinged tailgate.

6. A vehicle as claimed in any one of the preceding Claims, in the form of a trailer.

FIG.1

FIG.2

FIG.3

FIG.4

Fig. 5

ISOMETRIC VIEW OF
FRONT CORNER POST
WITH RETRACTABLE LEG
OTHER CORNER POSTS SIMILAR
NOT TO SCALE

Fig. 6

FIG. 7

EP 0 460 312 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-C-4 556 14   (WIRZ)<br>* the whole document *<br>– – – | 1,2 | B 60 P 1/34 |
| A | GB-A-2 104 487   (RAYMOND)<br>* page 3, line 3 - page 4, line 110; figures *<br>– – – | 1 | |
| A | US-A-4 348 054   (SHONKWILER)<br>* column 2, line 14 - column 4, line 6; figures *<br>– – – | 1 | |
| A | FR-A-2 460 801   (DUCHESNE)<br>* page 3, line 12 - page 7, line 36; figures *<br>– – – | 1 | |
| E | GB-A-2 226 805   (FRAYCO ENGINEERING)<br>* the whole document *<br>– – – – – | 1-6 | |

**TECHNICAL FIELDS SEARCHED (Int. Cl.5)**

B 60 P

The present search report has been drawn up for all claims

| Place of search | Date of completion of search | Examiner |
|---|---|---|
| The Hague | 04 February 91 | VANNESTE M.A.R. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document